Europäisches Patentamt

European Patent Office

Office européen des brevets

(11) Veröffentlichungsnummer: **0 050 210**
**A2**

(12) **EUROPÄISCHE PATENTANMELDUNG**

(21) Anmeldenummer: 81107226.3

(22) Anmeldetag: 14.09.81

(51) Int. Cl.³: **B 23 B 47/28**

(30) Priorität: 21.10.80 DE 3039609

(43) Veröffentlichungstag der Anmeldung: 28.04.82
Patentblatt 82/17

(84) Benannte Vertragsstaaten: **AT BE CH DE FR GB IT LI LU NL SE**

(71) Anmelder: **ZEG Zentraleinkauf Schreinermeister e.G.,
Einsteinstrasse 22, D-6800 Mannheim (DE)**

(72) Erfinder: **Zeeb, Wilhelm, Strahlenburgstrasse 1,
D-6800 Mannheim 81 (DE)**
Erfinder: **Mertel, Heinz, Wormser Strasse 22a,
D-6800 Mannheim 31 (DE)**

(74) Vertreter: **Kempe, Wolfgang, Dr., Postfach 1273,
D-6800 Mannheim 1 (DE)**

(54) **Bohrschablone.**

㋡ Die Bohrschablone dient zum Bohren von Lochreihen mit gleichmäßigem Rasterabstand der Löcher und von weiteren in ihrer Lage standardisierten Befestigungslöchern. Sie weist eine ebene Grundplatte (1) mit einer erhabenen Führungsschiene (2) auf, auf der eine Bohrschlittenplatte (7) mit einer Handoberfräse verschiebbar angeordnet ist. Die Bohrschlittenplatte (7) rastet in Paßlöcher (3) auf der Oberseite der Führungsschiene (2), die den gleichen Rasterabstand wie die zu bohrenden Löcher aufweisen, ein. Weitere Löcher (16) in der Grundplatte (1) dienen zur Aufnahme von Anschlagstiften (6), mittels derer die Lage der Grundplatte zum Werkstück nach Länge und Breite ausgerichtet werden kann.

- 1 -

ZEG Zentraleinkauf Schreinermeister e.G.
6800 Mannheim

## Bohrschablone

Die Erfindung bezieht sich auf eine Bohrschablone nach dem Oberbegriff des Anspruches 1.

Derzeit werden in Industrie- und großen Handwerksbetrieben elektronisch gesteuerte Maschinen zur Bohrung von Lochreihen verwendet, bei denen eine der gewünschten Lochzahl entsprechende Vielzahl von Bohrern gleichzeit zum Einsatz gelangen. Diese Arbeitsweise verursacht bei produktionsbedingter Umrüstung hohe Kosten, was dazu führt, daß kleine Aufträge oder Einzelanfertigungen nicht durchgeführt werden können.

Es ist ferner eine 1m lange Bohrschablone aus Aluminium mit

-2-

festen Bohrbuchsen bekannt. Diese Bohrschablone hat den Nachteil, daß durch das Material bedingt keine Hartmetallbohrer eingesetzt werden können und daß durch die festen Bohrbuchsen der Einsatz der verwendbaren Bohrdurchmesser auf den Durchmesser der entsprechenden Bohrbuchsen begrenzt ist.

Für den vielseitigen Handwerksbetrieb oder den Hobbybastler sind diese bekannten Vorrichtungen oder Schablonen jedoch nicht geeignet, da die Forderungen nach Durchmesser und Abstand der zu bohrenden Löcher häufig wechseln. Insbesondere bei der Bearbeitung von Schrankseiten besteht oft die Aufgabe, Lochreihen mit gleichen Abständen der Löcher untereinander zur Befestigung von Fachböden und deren beliebigen Versetzung sowie für die Befestigung von Beschlägen, Scharnieren oder dgl. zu bohren. Der vorliegenden Erfindung lag die Aufgabe zugrunde, die Bohrschablone der eingangs beschriebenen Art vorzugsweise für diesen Einsatz so zu verbessern, daß sie schnell und einfach handhabbar ist, den Einsatz hoch entwickelter teurer Maschinen überflüssig macht und trotzdem die Bohrung exakter Lochreihen mit beliebigen Lochdurchmessern ermöglicht.

Diese Aufgabe wird erfindungsgemäß durch die kennzeichnenden Merkmale des Anspruches 1 gelöst. Sobald die Grundplatte der Bohrschablone mit Hilfe der Anschlagstifte in die richtige Lage zum Werkstück gebracht ist und mit diesem kraftschlüssig, beispielsweise durch Schraubzwingen verbunden ist, wird die Bohrschlittenplatte mit der Handoberfräse auf der Führungsschiene von Paßloch zu Paßloch verschoben, wobei in jeder Stellung, in der der Stift in ein Paßloch eingreift und damit die Lage der Bohrschlittenplatte fixiert, ein Loch in das Werkstück gebohrt werden kann. Da die Paßlöcher in der Führungsschiene den gleichen Rasterabstand wie die zu bohrende Lochreihe aufweisen, ist sichergestellt, daß die Löcher im Werkstück stets in dem selben Abstand gebohrt werden. Die Benutzung der erfindungsgemäßen Bohrschablone bedarf keiner besonderen Vorkenntnisse und ist ohne weitere Vorarbeiten möglich. Dadurch wird eine kostengünstige Herstellung auch einzelner Werkstücke mit Lochreihen und gegebenenfalls weiteren Befestigungsbohrungen ermöglicht.

Zweckmäßige Weiterbildungen sind in den Unteransprüchen angegeben. Eine besonders vorteilhafte Weiterbildung betrifft die Möglichkeit, die Bohrschlittenplatte unter Federspannung auf die Führungsschiene aufschnappen zu lassen, so daß sie auf der Führungsschiene einen festen und stets gleichmäßigen Sitz aufweist.

Die Erfindung wird nachstehend anhand eines in der Zeichnung dargestellten Ausführungsbeispieles näher beschrieben und erläutert.

Es zeigen:

Fig. 1: eine Bohrschablone in Teilstücken in der Draufsicht;

Fig. 2: die Bohrschablone gemäß Fig. 1 im Querschnitt und

Fig. 3: die Bohrschablone gemäß Fig. 1 im Längsschnitt.

Die Borschablone gemäß Ausführungsbeispiel besteht aus einer Grundplatte 1, in die eine Führungsschiene 2 eingelassen ist, die an die Grundplatte angeschraubt ist. In die Oberseite dieser Führungsschiene 2 sind in genauem Rasterabstand

0050210

- 4 -

Paßlöcher 3 gebohrt. Auf der Führungsschiene 2 ist eine Bohrschlittenplatte 7, die auf ihrer Unterseite eine Führungsnut aufweist, verschiebbar angeordnet. Die Bohrschlittenplatte 7 trägt auf ihrer Oberseite eine Handoberfräse, von der in der Zeichnung der Übersichtlichkeit halber nur eine Befestigungsplatte 10 und ein Bohrer 11 dargestellt ist.

Die Bohrschlittenplatte 7 weist ferner einen Führungshalter 8 mit einem gefedert gelagerten Stift 9 auf, der je nach Lage der Bohrschlittenplatte in eines der Paßlöcher 3 in der Führungsschiene 2 eingreift und damit die Lage der Bohrschlittenplatte in Bezug auf die Grundplatte 1 fixiert.

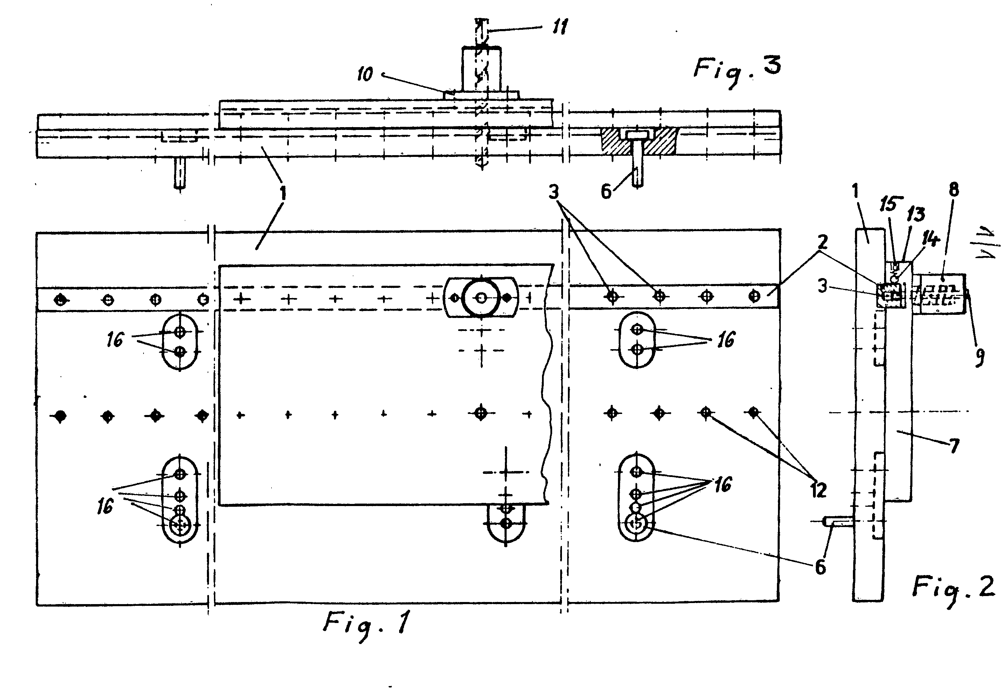

Wie aus der Schnittdarstellung gemäß Fig. 2 ersichtlich, weist die der Führungsnut unmittelbar benachbarte Seitenkante 13 der Bohrschlittenplatte 7 Gewindebohrungen auf, in welchen sich je eine unter Federspannung gelagerte Kugel 14 befindet, die die Führungsschiene 2 gegen die gegenüberliegende Wandung der Führungsnut in der Bohrschlittenplatte 7 drücken, so daß jegliches Spiel zwischen der Bohrschlittenplatte und der Führungsschiene und damit der Grundplatte 1 ausgeschaltet ist. Die Federspannungen, unter denen die Kugeln 14 gelagert sind, können durch Madenschrauben 15 eingestellt werden. Die Einstellung erfolgt so, daß die Bohrschlittenplatte 7 ohne Gewalt auf die Führungsschiene 2 aufgeschnappt und von Paßloch zu Paßloch verschoben werden kann.

Sobald der Stift 9 in ein Paßloch 3 eingerastet ist, kann der Bohrvorgang durchgeführt werden. Der Bohrer 11 durchsticht dabei zunächst ein Bohrloch in der Bohrschlittenplatte 7, dann ein Bohrloch 12 in der Grundplatte 1 und trifft dann auf das Werkstück, in das die Lochreihe gebohrt werden soll. Die

-5-

Tiefe der Bohrung wird zweckmäßigerweise vorher durch eine Probebohrung ermittelt. Ein an der Handoberfräse einstellbarer Anschlag ermöglicht dann, daß jede Bohrung bis in die gleiche Tiefe geführt werden kann. Nachdem der Bohrvorgang beendet ist und sich der Bohrer 11 wieder in der Ruhestellung befindet, wird die Bohrschlittenplatte 7 auf der Führungsschiene 2 bis zum nächsten Paßloch 3 verschoben. Daraufhin kann der nächste Bohrvorgang durchgeführt werden.

Der übliche Rasterabstand der Paßlöcher 3 beträgt 32 mm. Dies ist im Möbelbau ein Standardmaß. Die Führungsschiene 2 kann jedoch ohne weiteres gegen eine Führungsschiene mit einem anderen Rastermaß ausgetauscht werden.

Zur Festlegung der Lage der Grundplatte 1 gegenüber dem Werkstück in Richtung der zu bohrenden Lochreihe und senkrecht zu dieser Richtung sind in der Grundplatte Löcher 16 vorgesehen, in die Anschlagstifte 6 gesteckt werden können. Die Löcher 16 weisen auf der Oberseite der Grundplatte 1 Einsenkungen für den Kopf eines jeden Anschlagstiftes 6 auf, damit dieser nicht über die Oberfläche der Grundplatte 1 hinausragt. Die Lage der Löcher 16 ist so gewählt, daß der Abstand der zu bohrenden Löcher oder Lochreihen im Werkstück zur Kante dieses Werkstücks nach Länge und Breite den gängigen, häufig genormten Maßen entspricht. Durch Farbmarkierungen der Löcher 16 wird dem Benutzer der Bohrschablone die Zuordnung dieser Löcher und damit das richtige Einsetzen der Anschlagstifte 6 zu der jeweils gestellten Aufgabe erleichtert. Vorgesehen sind insbesondere Löcher für Anschlagstifte, die den richtigen Kantenabstand für Lochreihen in Schrankseiten zur Befestigung von Fachböden und für weitere Befestigungsbohrungen für Klappenbänder, Topfbänder und Verbinder

- 6 -

garantieren. Für häufig wiederkehrende Spezialaufgaben kann der Benutzer der Bohrschablone selbst weitere Löcher 16 in der Grundplatte 1 vorsehen. Zweckmäßigerweise entsprechen Löchern 16 am linken Ende der Grundplatte 1 gleiche Löcher am rechten Ende der Grundplatte, so daß Befestigungsbohrungen im oberen und unteren Teilstück des Werkstückes mit dem gleichen Abstand zur jeweiligen Kante des Werkstückes gebohrt werden können.

Schließlich sei erwähnt, daß auf die gleiche Weise auch Ausnehmungen im Werkstück, beispielsweise für Topfbänder in genau fixierter Lage gefräst werden können. Damit die Bohrschablone auch bei der Herstellung von Lochreihen wechselseitig, d.h. mit Anschlag an der linken bzw. rechten Kante des Werkstückes verwendet werden kann, sind die Löcher 16 für die Anschlagstifte 6 exakt in einem Vielfachen des Rastermaßes der Paßlöcher 3 entfernt voneinander angeordnet.

Die Grundplatte 1 ist zweckmäßigerweise aus Holz, die Führungsschiene 2 dagegen aus Metall hergestellt. Für die Bohrschlittenplatte 7 empfiehlt sich zumindest eine Auskleidung der Führungsnut mit einem Blech- oder Kunststoffprofil.

0050210

31. August 1981
Zg 1

- 7 -

<u>Patentansprüche</u>

1. Bohrschablone für das Bohren von mit gleichmäßigem Rasterabstand voneinander und in einer Reihe angeordneten Löchern und/oder weiteren Befestigungsbohrungen in einem Werkstück, insbesondere in einem Möbelteil, gekennzeichnet durch eine auf das Werkstück auflegbare und mit diesem kraftschlüssig verbindbare ebene Grundplatte (1) mit einer sich parallel zur zu bohrenden Lochreihe erstreckenden erhabenen Führungsschiene (2), in deren Oberseite Paßlöcher (3) im Rasterabstand eingelassen sind und auf der eine Bohrschlittenplatte (7) mit einer Handoberfräse in Schienenlängsrichtung verschiebbar angeordnet ist, wobei die Bohrschlittenplatte und die Grundplatte durch einen jeweils in eines der Paßlöcher eingreifenden Stift (9) in ihrer gegenseitigen Lage fixierbar sind, und durch Löcher (16) in der Grundplatte, in die Anschlagstifte (6) zur Festlegung der Lage der Grundplatte gegenüber dem Werkstück in Richtung der zu bohrenden Lochreihe und/oder senkrecht zu dieser Richtung wahlweise einsteckbar sind.

2. Bohrschablone nach Anspruch 1, dadurch gekennzeichnet, daß die Grundplatte (1) aus Holz und die Führungsschiene (2) aus Metall besteht.

3. Bohrschablone nach Anspruch 1 oder 2, dadurch gekennzeichnet, daß die Bohrschlittenplatte (7) auf ihrer Unterseite eine Führungsnut für die Führungsschiene (2) aufweist.

-8-

4. Bohrschablone nach Anspruch 3, dadurch gekennzeichnet, daß die Bohrschlittenplatte (7) Vorrichtungen zum spiellosen Aufschnappen auf der Führungsschiene (2) aufweist.

5. Bohrschablone nach Anspruch 4, dadurch gekennzeichnet, daß die Vorrichtungen unter Federspannung gelagerte Kugeln (14) aufweisen.

6. Bohrschablone nach Anspruch 5, dadurch gekennzeichnet, daß die Federspannungen durch Schrauben (15) einstellbar sind.

7. Bohrschablone nach einem der vorhergehenden Ansprüche, dadurch gekennzeichnet, daß der Stift (9) unter Federspannung in das jeweilige Paßloch (3) einrastet.

8. Bohrschablone nach einem der vorhergehenden Ansprüche, dadurch gekennzeichnet, daß die Löcher (16) zur Aufnahme der Anschlagstifte (6) eine Einsenkung für den Kopf des Anschlagstiftes aufweisen.

9. Bohrschablone nach einem der vorhergehenden Ansprüche, dadurch gekennzeichnet, daß der Abstand der Löcher (16) zur Aufnahme der Anschlagstifte (6) in Richtung der Längserstreckung der Führungsschiene (2) einem Mehrfachen des Rasterabstandes der Paßlöcher (3) entspricht.

1/1

Fig. 2

Fig. 3

Fig. 1